(19) Europäisches Patentamt

European Patent Office

Office européen des brevets

(11) Veröffentlichungsnummer: **0 272 389 B1**

(12) **EUROPÄISCHE PATENTSCHRIFT**

(45) Veröffentlichungstag der Patentschrift: **03.06.92**

(21) Anmeldenummer: **87114556.1**

(22) Anmeldetag: **06.10.87**

(51) Int. Cl.⁵: **F16D  65/56**

(54) **Selbsttätige Nachstellvorrichtung für eine Scheibenbremse.**

(30) Priorität: **22.12.86 DE 3643923**
       **22.01.87 DE 3701693**

(43) Veröffentlichungstag der Anmeldung:
   **29.06.88 Patentblatt  88/26**

(45) Bekanntmachung des Hinweises auf die
   Patenterteilung:
   **03.06.92 Patentblatt  92/23**

(84) Benannte Vertragsstaaten:
   **DE FR GB IT SE**

(56) Entgegenhaltungen:
   **DE-A- 3 505 411**

(73) Patentinhaber: **ALFRED TEVES GMBH**
   **Guerickestrasse 7**
   **W-6000 Frankfurt/Main 90(DE)**

(72) Erfinder: **Weiler, Rolf**
   **Zum Kohlwaldfeld 20**
   **W-6239 Eppstein(DE)**
   Erfinder: **Panek, Claus-Peter**
   **Feldbergstrasse 41**
   **W-6372 Steinbach(DE)**
   Erfinder: **Schmidt, Bodo**
   **Löbersgasse 12**
   **W-6420 Lauterbach(DE)**

(74) Vertreter: **Grau, Ulf**
   **c/o ALFRED TEVES GMBH Guerickestrasse 7**
   **W-6000 Frankfurt (M) 90(DE)**

## Beschreibung

Die Erfindung betrifft eine selbsttätige Nachstellvorrichtung für eine Scheibenbremse gemäß dem Oberbegriff des Patentanspruches 1.

Eine derartige Nachstellvorrichtung ist aus der DE-A-35 05 411 bekannt.

Bei dieser Nachstellvorrichtung ist die Reibkupplung zwischen der Nachstellmutter und einem mechanisch betätigbaren Klemmstück ausgebildet. Die Nachstellmutter weist im Kupplungsbereich eine radial nach außen verlaufende, trompetenartige Erweiterung auf, an der die Reibfläche ausgebildet ist, die mit einer entsprechenden Reibfläche am Klemmstück zusammenwirkt, welches entsprechend weit nach außen geführt ist, um die trompetenartige Erweiterung der Nachstellmutter von außen zu umgreifen. Die bekannte Lösung arbeitet zwar im wesentlichen zufriedenstellend, läßt jedoch bezüglich des Herstellungsaufwandes noch Wünsche offen.

Der Erfindung liegt daher die Aufgabe zugrunde, eine selbsttätige Nachstellvorrichtung der im Oberbegriff des patentanspruches 1 angegebenen Art dahingehend zu verbessern, daß sie einfacher und damit billiger herstellbar ist.

Diese Aufgabe wird erfindungsgemäß durch die den Patentanspruch 1 kennzeichnenden Merkmale gelöst.

Der erfindungsgemäßen Lösung wird eine selbsttätige Nachstellvorrichtung für Scheibenbremsen geschaffen, bei der aufgrund der Gestalt und Anordnung ihrer Bestandteile die Montage optimiert ist und die Herstellkosten wesentlich gesenkt werden können. Dies wird dadurch erreicht, daß als Aufnahmehülse ein einfaches Rohr verwendet wird und die Montage der Nachstellung in einfachster Weise durch Einpressen der Aufnahmehülse erfolgt. Entweder kann hierzu eine Presspassung mit "centerless" geschliffener Hülse oder eine Hülse in geschlitzter Ausführung verwendet werden. Eine vorteilhafte Ausführungform der Erfindung sieht vor, daß zwischen der Aufnahmehülse und dem boden bzw. einer Schulter der Bohrung zumindest eine Ausgleichsscheibe angeordnet ist. Durch die erfindungsgemäße Ausgestaltung ist für das Einstellen des Funktionsspieles grundsätzlich nur eine einzige Ausgleichsscheibe erforderlich. Zweite Ausgleichsscheiben zum Einstellen von Verstemmüberständen sind nicht mehr erforderlich, da im Gegensatz zu der bekannten Lösung ein Verstemmvorgang nicht mehr erfolgt, wodurch sich auch eine höhere Verfahrenssicherheit ergibt, da keine Materialverformungen durchgeführt werden müssen.

Gemäß einer weiteren vorteilhaften Ausführungsform der Erfindung ist vorgesehen, daß das die Aufnahmehülse bildende Rohr im Bereich der Klemmverbindung einen geringfügig größeren Durchmesser aufweist, an dessen aus der Bohrung herausstehenden Ende eine Stufe ausgebildet ist. Mit einer derartigen Stufe bzw. einem Absatz wird das Einpressen der Aufnahmehülse erleichtert. Das Einpresen kann jedoch auch über die Bauteile Gewindehülse und Lager (bei kleinen Einpreßkräften) erfolgen.

Um eine möglichst platzsparende Bauweise auch in axialer Richtung zu erzielen, ist gemäß einer weiteren vorteilhaften Ausführungsform der Erfindung vorgesehen, daß die Nachstellmutter in eine im Klemmstück ausgebildete Ausnehmung hineinragt.

Um auf einfache Weise eine Verdrehsicherung für das Klemmstück zu bilden, kann gemäß einer Variante der Erfindung die Aufnahmehülse eine seitliche Ausnehmung aufweisen, in der ein in eine Bohrung des Klemmstückes ragender Stift geführt ist.

Eine andere erfindungsgemäße Lösung erreicht eine Verbilligung der Herstellung.

Diese Lösung ist im Anspruch 7 enthalten.

Mit dieser Lösung ist eine Erhöhung der Einpreßlänge von Federtopf/Aufnahmehülse und Aufnahmehülse/Bremsgehäuse möglich. Dadurch ergeben sich größerer axiale Auszugskräfte und Verdrehkräfte. Bei gleichen Auszugskräften ist eine billigere Fertigung durch größere Fertigungstoleranzen möglich.

Eine vorteilhafte Ausführungsform der Erfindung sieht vor, daß die Aufnahmehülse und die Einpreßhülse Anpreßflächen aufweisen, die insbesondere konisch ausgebildet sind.

Gemäß einer weiteren vorteilhaften Ausführungsform ist zwischen der Aufnahmehülse und einem in der Bohrung gebildeten Absatz eine Scheibe angeordnet.

In fertigungstechnisch sehr zweckmäßiger Weise ist die Aufnahmehülse und/oder die Einpreßhülse bzw. und/oder die Gewindehülse aus einem geraden Rohrstück gefertigt.

Ausführungsbeispiele der Erfindung sind in der Zeichnung dargestellt und im folgenden beschrieben.

Es zeigen:

Fig. 1      einen Längsschnitt durch eine erste Ausführungsform eine (nur teilweise dargestellten) Scheibenbremse mit selbsttätiger Nachstellvorrichtung;

Fig. 2      einen Längsschnitt durch eine andere Ausführungsform einer selbsttätigen Nachstellvorrichtung (wobei die Scheibenbremse gleichfalls nur teilweise zu sehen ist); und

Fig. 3      einen Querschnitt durch eine Verdrehsicherung für das Klemmstück,

Fig. 4      eine andere Ausführungsform der Erfindung.

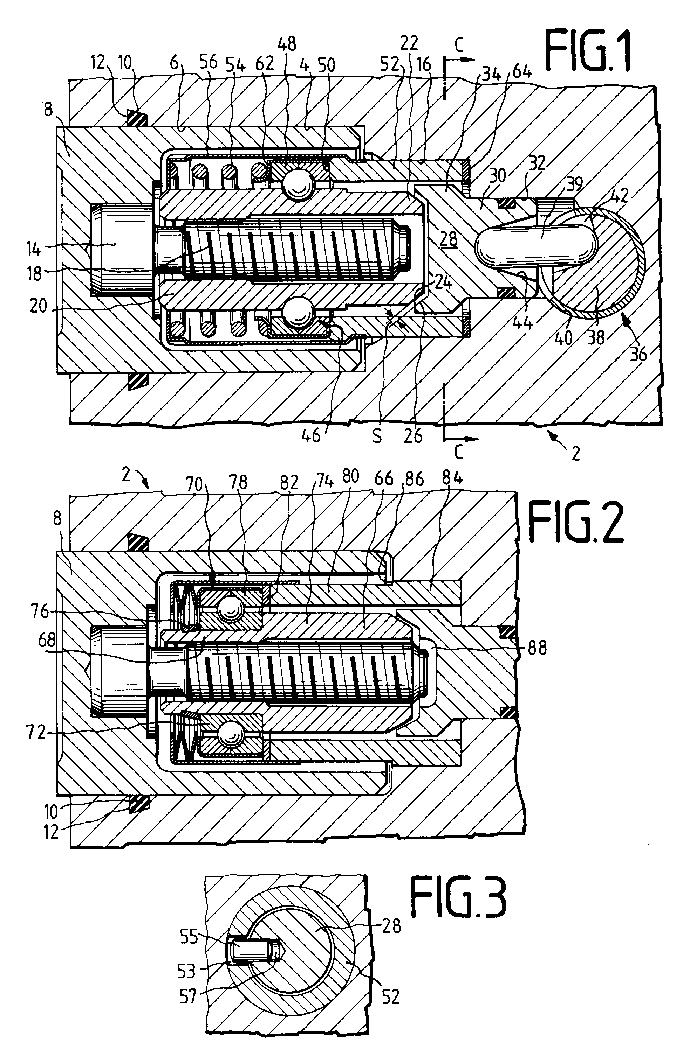

Es wird zunächst auf die in Fig. 1 dargestellte Ausführungsform einer Scheibenbremse mit selbsttätiger Nachstellvorrichtung Bezug genommen.

In einem Bremsgehäuse 2 ist eine mehrfach gestufte Zylinderbohrung 4 vorgesehen. Im Bohrungsabschnitt 6 mit dem größten Durchmesser ist ein Bremskolben 8 axial verschiebbar angeordnet. Der Bremskolben 8 ist topfförmig ausgebildet, wobei ein offenes Ende in der Zylinderbohrung 4 angeordnet ist, während sein geschlossenes Ende aus der Zylinderbohrung 4 herausragt, um gegen eine (nicht dargestellte) Bremsbacke zu drücken. Zur Abdichtung des Bremskolbens 8 gegenüber der Zylinderbohrung ist in an sich bekannter Weise eine sogen. Roll-back-Dichtung 10 in einer Ringnut 12 des Bremsgehäuses 2 angeordnet, die auch die Rückstellung des Bremskolbens 8 bewirkt.

Am Boden des Bremskolbens 8 ist drehfest eine Nachstellspindel 14 angebracht, die sich koaxial durch den vom Bremskolben gebildeten Hohraum bis in einen Bohrungsabschnitt 16 veringerten Durchmessers erstreckt. Die Nachstellspindel 14 weist ein selbsthemmungsfreies auf der Nachstellspindel 14 angeordnete Nachstellmutter 20. Die Nachstellmutter hat im wesentlichen zylindrische Gestalt und weist an ihrem dem Kolben abgewandten Ende eine konische Reibfläche 24 auf. Sie kann demzufolge aus einem einfachen ggf. gestuften Rohrstück in herstellungstechnisch sehr günstiger Weise gefertigt werden.

Mit der konischen Reibfläche 24 wirkt eine weitere konische Reifläche 26 zusammen, die an einem Klemmstück 28 vorgesehen ist. Das Klemmstück 28 weist einen zylindrischen Abschnitt 30 auf, der in einem Bohrungsabschnitt 32 verringerten Durchmessers verschiebbar angeordnet ist, sowie einen Abschnitt 34 vergrößerten Durchmessers, an dem die Reibfläche 26 vorgesehen ist. Der Abschnitt 34 des Klemmstückes 28 umgreift das Ende 22 der Nachstellmutter 20 von außen, wobei zwischen den Reibflächen 24, 26 das Handbremsfunktionsspiel S verbleibt. Dadurch, daß die Nachstellmutter keine radiale Erweiterung aufweist, kann auch das Klemmstück 28 mit sehr geringem Durchmesser im Bereich des Abschnittes 34 gefertigt sein.

Außer dem Klemmstück 28, auch Handbremskolben genannt, weist die mechanische Betätignungseinrichtung noch eine Exzentervorrichtung 36 auf, die über einen Stößel 39 auf den Handbremskolben 28 einwirkt. Die Exzentervorrichtung 36 weist eine Welle 38 auf, die in einer quer zur Zylinderbohrung 4 verlaufenden Bohrung 40 drehbar gelagert ist und an der (in nicht dargestellter Weise) ein Handbremshebel angebracht ist. In der Welle 38 ist eine Ausnehmung 42 vorgesehen, in der ein Ende des Stößels 39 angeordnet ist. Das andere Ende des Stößels ist in einer im Klemmstück 28 vorgesehenen Ausnehmung 44 angeordnet. Das Klemmstück 28 wird mittels einer Verdrehsicherung festgehalten, die in Fig. 3 dargestellt ist.

Der dem Bremskolben 8 zugewandte Teil der Nachstellmutter 20 trägt ein Vierpunktkugellager 46, dessen innerer Lagerring hier von der Nachstellmutter 20 selbst gebildet wird. Der äußere, entlang einer senkrecht zur Drehachse verlaufenden Ebene zweigeteilte Lagerring 48 des Kugellagers 46 liegt an einer Schulter 50 einer Aufnahmehülse 52 an, die im Bremsgehäuse 2 befestigt ist und sich in axialer Richtung zwischen der Nachstellmutter 20 und der Wandung des Bremskolbens 8 erstreckt. Auf der anderen Seite des äußeren Lagerringes 48 liegt über einem Lagerkäfig eine Feder 54 an, die sich an einem Federtopf 56 abstützt, der an der Aufnahmehülse 52 befestigt ist.

Der Federtopf 56 ist bei dieser Ausführungsform mittels einer Lancierung an der Aufnahmehülse 52 befestigt. Alternativ zu dieser Befestigung kann eine Schrumpfverbindung in Frage kommen (Fig. 2), bei der entsprechende Ausnehmungen bzw. Vertiefungen an der Aufnahmehülse 52 nicht vorgesehen sein brauchen. Zum Einstellen des Funktionsspiels ist bei dieser Ausführung eine Ausgleichsscheibe 64 zwischen der Aufnahmehülse 52 und der am Übergang vom Bohrungsabschnitt 16 zum Bohrungsabschnitt 32 gebildeten Schulter vorgesehen. Die Aufnahmehülse 52, die aus einem einfachen, geraden Rohrstück hergestellt ist, ist mit Preßsitz im Bohrungsabschnitt 16 befestigt. Die Montage der Nachstellung erfolgt hierbei nur durch Einpressen der Aufnahmehülse über die Nachstellmutter 20 und das Lager 46. Da auch die Nachstellmutter 20 aus einem geraden Rohrstück gefertigt ist, an dessen einem Ende unmittelbar die Reibfläche 24 ausgebildet ist und das Klemmstück 28 bzw. dessen die andere Reibfläche 26 bildender Abschnitt 34 gleichfalls nur einen relativ geringen Durchmesser aufweist, kann in herstellungstechnisch äußerst zweckmäßiger Weise die Aufnahmehülse 52 aus einem geraden, einfachen Rohrstück gefertigt werden, unter optimaler Ausnutzung des zur Verfügung stehenden Raumes.

Es wird sodann auf Fig. 2 Bezug genommen, die eine andere Ausführungsform einer Nachstellvorrichtung zeigt. Da die Bremse und auch wesentliche Teile der Nachstellvorrichtung der in Fig. 1 dargestellten Anordnung entsprechen, sind im folgenden lediglich die Unterschiede bezüglich Fig. 1 dargestellt.

Die Nachstellmutter 66, die auch bei dieser Ausführungsform aus einem einfachen Rohrstück gefertigt sein kann, weist hier einen Abschnitt 68 verringerten Durchmessers auf, auf dem ein Kugellager 70 angeordnet ist, welches hier ein separate Baueinheit bildet. Das Lager liegt mit seinem inneren Lagerring 72 an einer zwischen dem Abschnitt 68 und einem Abschnitt 74 vergrößerten Durchmesser gebildeten Schulter an. Zur Sicherung des Lagers ist ein Haltering 78 in einer Nut des Abschnittes 68 angeordnet. Zwischen dem äußeren Lagerring 78 und dem Ende der Aufnahmehülse 80 ist eine Ausgleichsscheibe 82 angeordnet. Die auch bei dieser Ausführungsform aus einem einfachen Rohrstück gefertigte Aufnahmehülse weist hier im Bereich des Preßsitzes einen Abschnitt 84 mit etwas vergrößertem Durchmesser auf, so daß eine Stufe 86 gebildet ist, die das Einpressen der Aufnahmehülse 80 erleichtert. Durch optimaleren Lastangriff am Klemmstück ist es möglich, in diesem eine Vertiefung 88 vorzusehen, die über den konischen Bereich hinausgeht, wodurch Raum für eine Spindel-Annäherung geschaffen ist, was eine Verkürzung der Baugröße ermöglicht.

Fig. 3 zeigt einen Querschnitt entlang der Linie C-C in Fig. 1, aus dem eine Verdrehischerung für das Klemmstück 28 ersichtlich ist. Die Aufnahmehülse 52 weist hierbei seitlich eine Ausnehmung 53 auf, in der ein Stift 55 geführt ist, der in eine Bohrung 57 im Klemmstück 28 eingreift.

Eine vorteilhafte Ausführungsform der Erfindung sieht vor, daß die Aufnahmehülse und die Einpreßhülse Anpreßflächen aufweisen, die insbesondere konisch ausgebildet sind.

Gemäß einer weiteren vorteilhaften Ausführungsform ist zwischen der Aufnahmehülse und einem in der Bohrung gebildeten Absatz eine Scheibe angeordnet.

In fertigungstechnisch sehr zweckmäßiger Weise ist die Aufnahmehülse und/oder die Einpreßhülse bzw. und/oder die Gewindehülse aus einem geraden Rohrstück gefertigt.

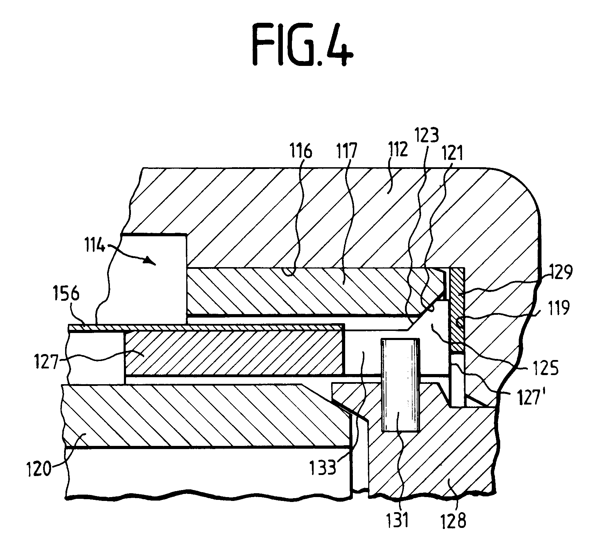

Ein anderes Ausführungsbeispiel der Erfindung ist in Fig. 4 dargestellt und im folgenden beschrieben. Da die erfindungsgemäße Nachstellvorrichtung in weiten Teilen mit der Ausführungsform gemäß Fig. 1 bis 3 übereinstimmt, sind in der Fig. 4 nur die für die vorliegende Erfindung wesentlichen Teile dargestellt und im folgenden beschrieben. Im übrigen wird auf die Fig. 1 bis 3 Bezug genommen. Im Bremsgehäuse 112 ist eine abgestufte Bohrung 114 vorgesehen, mit einem Bohrungsabschnitt 116, der zur Befestigung einer Einpreßhülse 117 dient. Die aus einem geraden Rohrstück gefertigte Einpreßhülse 117 weist an ihrem einem, dem Absatz 119 der Bohrung zugewandten Ende eine konische Anpreßfläche 121 auf. Diese konische Anpreßfläche 121 wirkt mit einer weiteren konischen Anpreßfläche 123 zusammen, die an einer radialen Erstreckung 125 der gleichfalls zweckmäßig aus einem geraden Rohrstück gefertigten Aufnahmehülse 127 ausgebildet ist. Die Afnahmehülse trägt an ihrem Außenumfang den (nur teilweise dargestellten) Federtopf 156. Zwischen der Stirnfläche 127 und dem Absatz 119 ist eine Scheibe 129 angeordnet. Im Klemmstück 128 sitzt ein Stift 131, der in eine Ausnehmung 133 eingreift, die im Endbereich der Aufnahmehülse 127 vorgesehen ist. Dadurch wird eine Verdrehsicherung für das mit der Nachstellmutter 120 zusammenwirkende Klemmstück 128 gebildet. Zur Montage der Nachstellvorrichtung wird eine Nachstellungspatrone (u.a. Federtopf, Aufnahmehülse, Nachstellmutter) fertig vormontiert angeliefert und im Gehäuse mit dem Schlitz der Aufnahmehülse auf dem Stift 131 gesteckt. Danach wird die Einpreßhülse 117 über die Nachstellpatrone geschoben und im Gehäuse auf Anschlag eingepreßt. Hierbei erfolgt über die konischen Anpreßflächen 121,123 eine Zeutrierung und zusätzlich eine axiale und radiale Sicherung.

**Patentansprüche**

1. Selbsttätige Nachstellvorrichtung für eine Scheibenbremse,
   - wobei die Scheibenbremse einen Bremskolben (8) aufweist, der zur Betätigung einer Bremsbacke in einem Bremszylinder (6) verschiebbar angeordnet und der mittels einer hydraulischen und einer mechanischen Betätigungseinrichtung (28,38,39) betätigbar ist,
   - mit einem zwischen dem Bremskolben (8) und der mechanischen Betätigungseinrichtung (28,38,39) angeordneten, zwei über ein selbsthemmungsfreies Gewinde miteinander verbundene Nachstellelemente (18,20,66,120) (Nachstellspindel und Nachstellmutter) aufweisenden, verlängerbaren Nachstellglied, und
   - mit einer Reibkupplung (24,26) mit konischen Reibflächen, zum Festhalten eines der Nachstellelemente (18 bzw. 20,66,120) bei mechanischer Betätigung, wobei eine der konischen Reibflächen (24) an einem der Nachstellelemente (20,66,120) und die andere Reibfläche (26) an einem mechanisch betätigbaren Klemmstück (28) ausgebildet ist, und mit einem mittels einer Aufnahmehülse (52,80,127) am Bremsgehäuse (2) befestigten Federtopf (56,156), dadurch **gekennzeichnet,**
   - daß die Aufnahmehülse (52,80,127) und die Nachstellmutter (20,66,120) aus zylindrischen Rohrstücken bestehen, wobei die Aufnahmehülse (52,80,127) durch Einpressen im Gehäuse (2,112) befestigt ist.

2. Nachstellvorrichtung nach Anspruch 1, dadurch **gekennzeichnet,** daß zwischen der Aufnahmehülse (52) und einem Boden bzw. einer Schulter der Bohrung (16) zumindest eine Ausgleichsscheibe (64) angeordnet ist (Fig.1).

3. Nachstellvorrichtung nach Anspruch 1 oder 2, dadurch **gekennzeichnet,** daß das die Aufnahmehülse (80) bildende Rohr im Bereich (84) der Klemmverbindung einen geringfügig größeren Durchmesser aufweist, wobei die Durchmesseränderung durch eine Stufe (86) gebildet ist (Fig. 2).

4. Nachstellvorrichtung nach einem der Ansprüche 1 bis 3, dadurch **gekennzeichnet,** daß die Nachstellmutter (20,66,120) in eine im Klemmstück (28,128) ausgebildete Ausnehmung hineinragt.

5. Nachstellvorrichtung nach einem der vorhergehenden Ansprüche, dadurch **gekennzeichnet,** daß die Aufnahmehülse (52) eine seitliche Ausnehmung (53) aufweist, in der ein in eine Bohrung (57) des Klemmstückes (28) ragender Stift (55) geführt ist (Fig. 3).

6. Nachstellvorrichtung nach einem der Ansprüche 1 bis 5, dadurch **gekennzeichnet,** daß die Aufnahmehülse (52,80) in eine entsprechende Bohrung (16) im Bremsgehäuse (2) eingepreßt ist (Fig. 1, Fig. 2).

7. Nachstellvorrichtung nach einem der vorhergehenden Ansprüche, dadurch **gekennzeichnet,** daß die Aufnahmehülse (127) von einer in der Bohrung (116) befestigten Einpreßhülse (117) gehalten ist (Fig. 4).

8. Nachstellvorrichtung nach Anspruch 7, dadurch **gekennzeichnet,** daß die Aufnahmehülse (127) und die Einpreßhülse (117) Anpreßflächen (123,121) aufweisen, die insbesondere konisch ausgebildet sind.

9. Nachstellvorrichtung nach Anspruch 7 oder 8, dadurch **gekennzeichnet,** daß zwischen der Aufnahmehülse (127) und einem in der Bohrung (114) gebildeten Absatz (119) eine Scheibe (129) angeordnet ist.

10. Nachstellvorrichtung nach einem der Ansprüche 7 bis 9, dadurch **gekennzeichnet,** daß die Einpreßhülse (117) aus einem geraden Rohrstück gefertigt ist.

## Claims

1. An automatic adjusting device for a disc brake,
   - the disc brake comprising a brake piston (8) which, for the application of a brake shoe, is displaceably arranged in a brake cylinder (6) and which is actuatable by means of a hydraulic and a mechanic actuating device (28, 38, 39),
   - comprising an extensible adjusting member arranged between the brake piston (8) and the mechanic actuating device (28, 38, 39) and including two adjusting elements (18, 20, 66, 120) (adjusting spindle and adjusting nut) interconnected via a thread without self-locking engagement, and
   - comprising a friction clutch (24, 26) having conical friction surfaces to the end of fixing-in-position one of the adjusting elements (18 and 20, respectively, 66, 120) upon mechanic actuation, one of the conical friction surfaces (24) being designed on one of the adjusting elements (20, 66, 120), while the other friction surface (26) is designed on a mechanically actuatable clamping member (28),
   and comprising a bowl-type spring retainer (56, 156) which is secured to the brake housing (2) by virtue of an accommodation sleeve (52, 80, 127),
   **characterized** in that the accommodation sleeve (52, 80, 127) and the adjusting nut (20, 66, 120) are made from cylindrical tubular members, the accommodation sleeve (52, 80, 127) being secured in the housing (2, 112) by being pressed thereinto.

2. An adjusting device as claimed in claim 1, **characterized** in that at least one compensating washer (64) is interposed between the accommodation sleeve (52) and a bottom or a shoulder of the bore (16) (Figure 1).

3. An adjusting device as claimed in claim 1 or 2, **characterized** in that the tube forming the accommodation sleeve (80) has a slightly larger diameter in the area (84) of the clamping engagement, the change in diameter being formed by a step (86) (Figure 2).

4. An adjusting device as claimed in any one of the claims 1 to 3, **characterized** in that the adjusting nut (20, 66, 120) projects into a recess shaped in the clamping member (28, 128).

5. An adjusting device as claimed in any one of the preceding claims, **characterized** in that the accommodation sleeve (52) is provided with a lateral recess (53) wherein a pin (55) is guided which projects into a bore (57) of the clamping member (28, 128) (Figure 3).

6. An adjusting device as claimed in any one of the claims 1 to 5,
**characterized** in that the accommodation sleeve (52, 80) is pressed into a corresponding bore (16) in the brake housing (2) (Figure 1, Figure 2).

7. An adjusting device as claimed in any one of the preceding claims,
**characterized** in that the accommodation sleeve (127) is retained by a press-in sleeve (117) secured in the bore (116) (Figure 4).

8. An adjusting device as claimed in claim 7,
**characterized** in that the accommodation sleeve (127) and the press-in sleeve (117) comprise contact surfaces (123, 121) which are in particular of conical design.

9. An adjusting device as claimed in claim 7 or 8,
**characterized** in that a washer (129) is arranged between the accommodation sleeve (127) and a step (119) formed in the bore (114).

10. An adjusting device as claimed in any one of the claims 7 to 9,
**characterized** in that the press-in sleeve (117) is manufactured from a straight tubular member.

**Revendications**

1. Dispositif automatique de rattrapage de jeu, pour frein à disque,
   - le frein à disque comprenant un piston de frein (8) qui est disposé de façon à pouvoir se déplacer en translation dans un cylindre de frein (6) en vue de l'actionnement d'une mâchoire de frein et qui est agencé de façon à pouvoir être actionné au moyen d'un dispositif hydraulique et d'un dispositif mécanique d'actionnement (28, 38, 39),
      ce dispositif comprenant
   - un organe de rattrapage de jeu agencé de façon à pouvoir s'allonger, disposé entre le piston de frein (8) et le dispositif mécanique d'actionnement (28, 38, 39) et comprenant deux éléments de rattrapage de jeu (18, 20, 66, 120) (tige filetée de rattrapage de jeu et écrou de rattrapage de jeu) réunis entre eux par un filetage sans autoblocage,
   - un embrayage à friction (24, 26) présentant des surfaces de friction de forme conique servant à immobiliser l'un des éléments de rattrapage de jeu (18 ou 20, 66, 120) lors d'un actionnement mécanique, l'une (24) des surfaces de friction de forme conique étant réalisée sur l'un des éléments de rattrapage de jeu (20, 66, 120) et l'autre surface de friction (26) sur une pièce de serrage (28) agencée de façon à pouvoir être actionnée mécaniquement,
   - et une cuvette de ressort (56, 156) fixée sur le boîtier de frein (2) au moyen d'un manchon de positionnement (52, 80, 127),
      caractérisé en ce que
   - le manchon de positionnement (52, 80, 127) et l'écrou de rattrapage de jeu (20, 66, 120) sont formés de pièces tubulaires cylindriques, le manchon de positionnement (52, 80, 127) étant fixé dans le boîtier (2, 112) par emboîtement à force.

2. Dispositif de rattrapage de jeu suivant la revendication 1, caractérisé en ce qu'au moins un disque de compensation (64) est disposé entre le manchon de positionnement (52) et un fond ou un épaulement de l'alésage (16) (figure 1).

3. Dispositif de rattrapge de jeu suivant la revendication 1 ou 2, caractérisé en ce que, dans la zone (84) de la liaison par serrage, le tube constituant le manchon de positionnement (80) a une partie cylindrique de diamètre légèrement plus grand, la variation de diamètre étant constituée par une partie en gradin (86) (figure 2).

4. Dispositif de rattrapage de jeu suivant l'une des revendications 1 à 3, caractérisé en ce que l'écrou de rattrapage de jeu (20, 66, 120) fait saillie dans un évidement ménagé dans la pièce de serrage (28, 128).

5. Dispositif de rattrapage de jeu suivant l'une des revendications précédentes, caractérisé en ce que le manchon de positionnement (52) comporte un évidement latéral (53) dans lequel s'étend une goupille (55) faisant saillie dans un perçage (57) de la pièce de serrage (28) (figure 3).

6. Dispositif de rattrapage de jeu suivant l'une des revendications 1 à 5, caractérisé en ce que le manchon de positionnement (52, 80) est emboîté à force dans un alésage (16) approprié qui est ménagé dans le boîtier de frein (2) (figure 1, figure 2).

7. Dispositif de rattrapage de jeu suivant l'une des revendications précédentes, caractérisé en ce que le manchon de positionnement (127) est maintenu par une douille d'emboîtement à force (117) qui est fixée dans l'alésage (116) (figure 4).

8. Dispositif de rattrapage de jeu suivant la revendication 7, caractérisé en ce que le manchon de positionnement (127) et la douille d'emboîtement à force (117) comportent des surfaces d'appui (123, 121) qui ont notamment une forme conique.

9. Dispositif de rattrapage de jeu suivant la revendication 7 ou 8, caractérisé en ce qu'un disque (129) est disposé entre le manchon de positionnement (127) et un décrochement (119) réalisé dans l'alésage (114).

10. Dispositif de rattrapage de jeu suivant l'une des revendications 7 à 9, caractérisé en ce que la douille d'emboîtement à force (117) est réalisée à partir d'une pièce tubulaire droite.

# FIG.1

# FIG.2

# FIG.3

# FIG.4